# FASCICULE DE BREVET EUROPEEN

(11) **EP 1 129 618 B1**
(45) Date de publication et mention de la délivrance du brevet: **02.06.2004**
(21) Numéro de dépôt: 01400540.9
(22) Date de dépôt: 01.03.2001
(51) Int. Cl.: A01M 7/00, B05B 15/08

(54) **Pendillard pour appareil de pulvérisation agricole**
Landwirtschaftliche Feldspritze mit aufhängendem deformierbaren Parallelogramm
Suspended deformable parallelogram for a field-spraying apparatus

(30) Priorité: 03.03.2000 FR 0002773
(43) Date de publication de la demande: 05.09.2001
(73) Titulaire: Exel Industries, 51200 Epernay (FR)
(72) Inventeur: Ballu, Patrick, 51100 Reims (FR)
(74) Mandataire: Caron, Gérard

(56) Documents cités:
- DE-A- 19 821 283
- FR-A- 2 762 187
- FR-A- 2 767 254

## Description

La présente invention est relative à un pendillard pour appareil de pulvérisation de produits de traitement, notamment de produits phytosanitaires sur de la végétation plantée en ligne selon des rangées parallèles, du type défini dans le préambule de la revendication 1.

Un tel pendillard est décrit dans la demande de brevet français n° 98 14 288 au nom de la Demanderesse. Il permet d'envoyer du produit phytosanitaire simultanément sur deux rangées adjacentes de la végétation, ce qui fait qu'un appareil complet équipé de deux pendillards peut traiter en une seule passe l'une des faces longitudinales de quatre rangées parallèles de la végétation, J'engin porteur passant dans le couloir entre les deuxième et troisième rangées. Les organes de pulvérisation sont montés réglables en hauteur et en orientation sur le pendillard.

Comme, vu transversalement à la direction de progression pendant la pulvérisation, les organes de pulvérisation de ce pendillard ont une distance mutuelle fixe, la quantité de produit phytosanitaire atteignant la végétation de part et d'autre du pendillard ne sera pas la même selon que les rangées sont proches ou éloignées les unes des autres.

Or, il arrive fréquemment sur une exploitation agricole que les rangées de la végétation ont des distances différentes entre elles par exemple en fonction du terrain ou de la nature de la végétation à traiter, la distance pouvant aller de 1,60 à 3,00 m, par exemple. Un pendillard de la technique antérieure utilisé sur de la végétation plantée dans ces conditions ne permet donc pas une pulvérisation avec une couverture foliaire uniforme (nombre d'impacts par unité de surface traitée) quelle que soit la parcelle traitée et on ne peut ainsi atteindre une pulvérisation optimale.

L'invention a pour but de proposer un pendillard du type défini ci-dessus qui permette d'obtenir une couverture foliaire uniforme quelle que soit la distance entre les rangées de végétaux.

L'invention a donc pour objet un pendillard du type défini ci-dessus présentant les particularités énoncées dans la partie caractérisante de la revendication 1.

Grâce à ces caractéristiques, le pendillard peut être adapté à toute une gamme de largeurs entre rangées d'une végétation en ligne sans modification de la couverture foliaire en produits phytosanitaire, la direction de pulvérisation par rapport à l'orientation des rangées pouvant être maintenue pour tous les réglages de l'envergure du pendillard.

D'autres caractéristiques de l'invention résultent des sous-revendications.

D'autres caractéristiques et avantages de l'invention apparaîtront au cours de la description qui va suivre, donnée uniquement à titre d'exemple et faite en se référant aux dessins annexés sur lesquels:
- la figure 1 est une vue en perspective schématique d'un appareil de pulvérisation muni d'un pendillard selon l'invention, cet appareil évoluant dans une parcelle agricole sur laquelle est plantée de la végétation en ligne;
- la figure 2 est une vue en perspective d'un pendillard selon l'invention dont la configuration est réglée pour une petite envergure;
- la figure 3 est une vue en perspective d'un pendillard selon l'invention dont la configuration est réglée pour une grande envergure;
- la figure 4 est une vue en élévation d'un pendillard selon l'invention, dépourvu de ses organes de pulvérisation, le réglage de sa configuration étant manuel selon une première variante de réalisation;
- la figure 5 est une vue en plan d'un pendillard selon l'invention, dépourvu de ses organes de pulvérisation et doté d'un mécanisme qui permet un réglage commandé de sa configuration;
- les figures 6 et 7 sont des vues en élévation du pendillard de la figure 5, représenté respectivement en configuration à grande envergure et en configuration à petite envergure; et
- les figures 8 et 9 montrent schématiquement un autre mode de réalisation de l'invention.

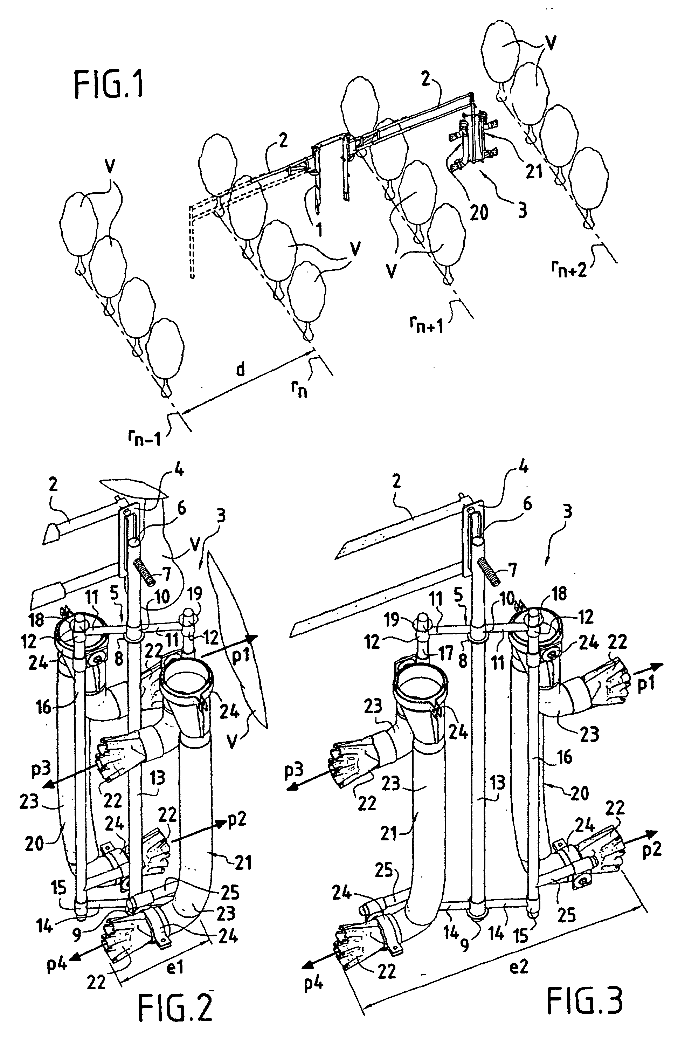

Sur la figure 1, on a représenté une vue d'en haut d'une parcelle de terrain sur laquelle sont implantés des végétaux V placés en ligne selon des rangées .....rₙ₋₁, rₙ, rₙ₊₁, rₙ₊₂..... Il peut s'agir d'arbrisseaux comme la vigne, d'arbustes, notamment fruitières etc. Dans cette représentation, les rangées de végétaux sont prévues à la même distance d les unes des autres. Cependant, cette distance peut être différente, soit dans une même parcelle, soit d'une parcelle à une autre, selon la configuration du terrain et la nature des végétaux, par exemple.

Un appareil pour le traitement de ces végétaux comprend un cadre 1 que l'on peut fixer sur un engin porteur, par exemple un tracteur ou un engin remorqué (non représenté).

Le cadre 1 porte deux bras télescopiques 2 qui s'étendent horizontalement de part et d'autre et qui portent chacun un pendillard 3. Selon la technique connue, pour adapter l'appareil de pulvérisation à la hauteur de la végétation, les bras 2 peuvent être montés articulés sur le cadre 1 de manière à pouvoir être inclinés plus ou moins et le cadre 1 lui-même peut être réglable en hauteur. En outre, les bras 2 sont de préférence télescopiques.

L'ensemble est pourvu de canalisations et de gaines permettant d'apporter aux pendillards 3 du produit phytosanitaire à pulvériser et de l'air pulsé, respectivement par l'intermédiaire d'une pompe et d'une soufflante dont est équipé l'engin porteur. Ces moyens d'alimentation des pendillards sont connus en soi et n'ont pas été représentés aux dessins.

Les figures 2 et 3 sont des vues en perspective d'un pendillard 3 selon l'invention, respectivement dans une configuration à petite envergure et dans une configuration à grande envergure.

A son extrémité libre, le bras télescopique 2 comporte une ferrure de support 4 à laquelle est rapportée une monture 5 comprenant une tige 6 orientée verticalement et fixée à la ferrure 4 par un boulonnage 7, par exemple. Deux butées annulaires, l'une 8 prévue en haut et l'autre 9 en bas de la tige 6 maintiennent verticalement la monture 5.

Sur la butée annulaire haute 8 repose un manchon 10 formant partie intégrante d'une traverse horizontale 11 se terminant, à chacune de ses extrémités par une douille de support 12. De même, sur la butée basse 9 repose un tube 13 qui entoure la tige 6 et qui définit la butée 8. Ce tube 13 est fait d'une seule pièce avec une traverse horizontale inférieure 14 comportant une douille de support 15 à chacune de ses extrémités. Les traverses 11 et 14 peuvent ainsi pivoter sur la tige 6.

Les axes des douilles 12 et 15 respectives sont verticalement alignés et portent deux à deux un ensemble de support pour au moins un organe de pulvérisation. Plus précisément, ces douilles sont traversées par des broches respectives 16 et 17 qui reposent sur les douilles 12 par l'intermédiaire de butées annulaires 18 et 19 prévues respectivement aux extrémités supérieures des broches 16 et 17. Celles-ci peuvent ainsi pivoter dans les douilles 12 et 15 correspondantes.

Chacune des broches 16 et 17 porte un organe de pulvérisation 20, 21 qui, dans le mode de réalisation illustré, comprennent chacun deux diffuseurs 22 (appelés "mains" en termes de métier) qui sont raccordés respectivement à des gaines d'air pulsé 23 et à des conduites de produit phytosanitaire (non représentées), ces gaines et ces conduites étant, d'une façon connue en soi, raccordées à des gaines et conduites de connexion menant via les bras télescopiques 2 vers le cadre 1 et de là à des moyens de ventilation et de pompage portés par le véhicule agricole. Les directions de pulvérisation des diffuseurs 22 sont indiquées par p1 à p4.

On voit que chacun des organes de pulvérisation 20 et 21 est rendu solidaire de la broche 16 ou 17 correspondante au moyen de colliers 24 fixés respectivement en haut sur la broche correspondante et en bas sur une patte horizontale 25 solidaire de cette broche.

La description qui vient d'être faite de la structure du pendillard selon l'invention permet de constater que la monture 5 peut pivoter autour d'un axe vertical par rapport au bras 2 et que les ensembles de support (broches 16 et 17) peuvent pivoter autour d'axes verticaux par rapport à la monture 5.

Il est ainsi possible non seulement d'orienter les organes de pulvérisation 20 et 21 de manière à déterminer une direction de traitement, mais également de faire varier l'envergure du pendillard de telle manière que les sorties de deux diffuseurs 23 disposés dans un même plan horizontal puissent se trouver à une distance déterminable par l'utilisateur. De plus, lors d'un changement d'envergure, l'utilisateur pourra conserver la direction de pulvérisation définie auparavant par rapport aux bras 2. Par conséquent, si lors d'un traitement la largeur entre rangées se modifie, l'envergure pourra être adaptée en conservant l'angle de pulvérisation sur la végétation. On peut ainsi garantir une couverture foliaire constante sur l'ensemble d'une exploitation, même si la distance d entre rangées n'est pas la même partout.

Ces propriétés avantageuses du pendillard selon l'invention sont illustrées sur les figures 2 et 3.

Sur la figure 2, les broches 16 et 17 et les organes de pulvérisation 20 et 21 qu'elles portent ont été tournés par rapport aux traverses 11 et 14 de manière à venir en butée contre la tige de support 6 et les traverses 11 et 14 ont été tournées sur la tige 6 de manière à orienter les directions de pulvérisation p1 à p4 parallèlement au plan dans lequel s'étend le bras 2. L'envergure du pendillard est alors égale à e1 comme indiqué sur la figure 2.

Sur la figure 3, on suppose que la monture 5 a été tournée de 180° par rapport au bras 2, cependant que les ensembles de support des organes de pulvérisation 20 et 21 ont été tournés de 180° par rapport à la monture 5. De ce fait, l'envergure du pendillard est devenue plus grande et prend la valeur e2 comme indiqué, alors que les directions de pulvérisation p1 à p4 ont été conservées.

La structure qui vient d'être décrite permet de régler le pendillard sur toute envergure e située entre les valeurs e1 et e2 représentées sur les figures 2 et 3, tout en conservant toujours les mêmes directions de pulvérisation pour les quatre diffuseurs.

Les figures 2 et 3 et la description qui vient d'en être faite, font abstraction de tout positionnement stable des parties pivotantes du pendillard. Or, lorsque le pendillard est utilisé, il convient de conserver une configuration stable qui ne sera modifiée que pour changer l'envergure du pendillard ou l'orientation des organes de pulvérisation par rapport aux rangées de la végétation.

L'homme de métier comprendra que le positionnement stable des éléments du pendillard pourra être obtenu en prévoyant des dispositifs de serrage mécanique, par vissage par exemple, permettant d'immobiliser ces éléments les uns par rapport aux autres, une fois que le réglage de l'envergure et des directions de pulvérisation a été fait.

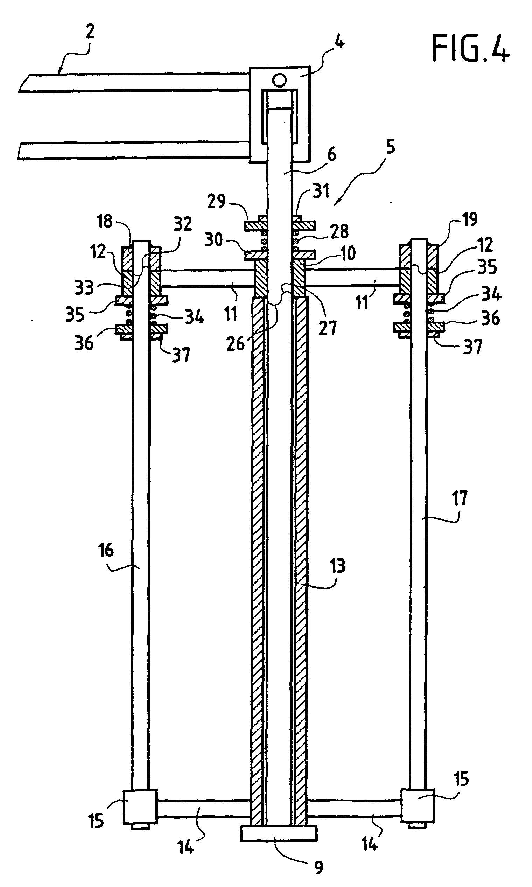

Cependant, selon l'invention, il est également possible de prévoir une indexation angulaire de ces éléments les uns par rapport aux autres pour assurer leur stabilité en position, ce dont la figure 4 présente un exemple simple.

On voit que la face radiale inférieure du manchon 10 présente une ondulation 26 coopérant avec une ondulation complémentaire 27 ménagée sur la face d'extrémité supérieure du tube 13. Les ondulations 26 et 27 sont en appui l'une sur l'autre par un ressort 28 placé entre deux rondelles 29 et 30, la rondelle supérieure 30 étant arrêtée par une goupille 31 traversant la tige 6.

Un agencement analogue peut être prévu pour chacune des broches 16 et 17. Ainsi, la face supérieure de chacune des douilles 12 comprend une ondulation 32 coopérant avec une ondulation complémentaire 33 prévue à la face inférieure de la butée annulaire 18 ou 19. Ces ondulations complémentaires sont en appui les unes sur les autres par des ressorts respectifs 34 placés chacun entre deux rondelles 35 et 36, la rondelle inférieure 36 étant arrêtée sur la broche 16 ou 17 par une goupille 37.

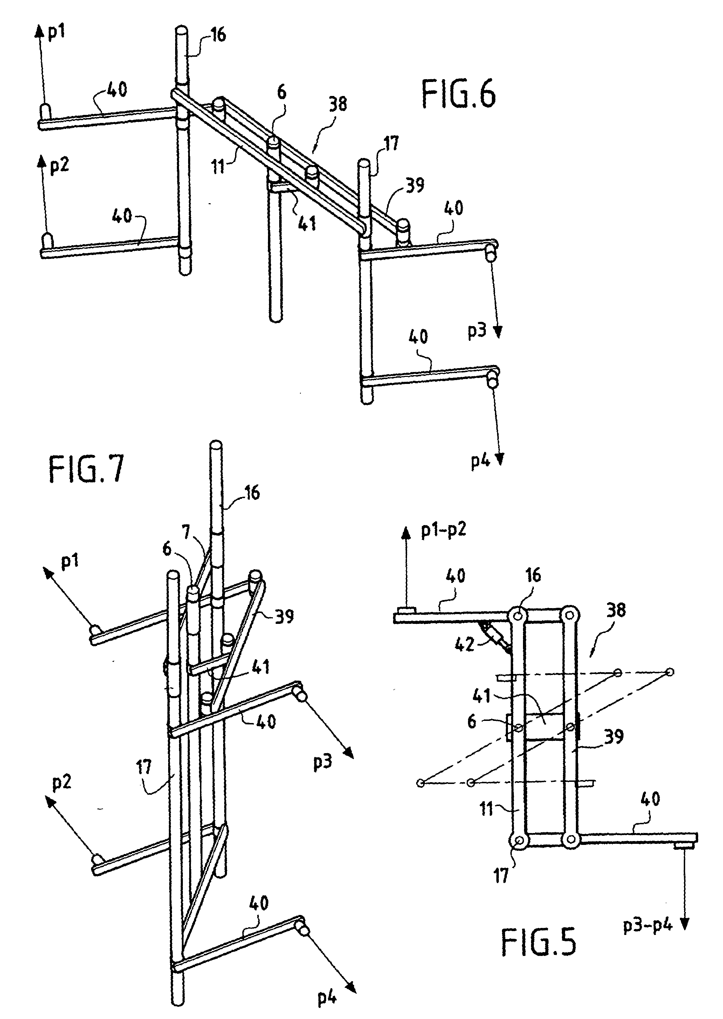

Selon une autre caractéristique avantageuse de l'invention, le pendillard qui vient d'être décrit peut être perfectionné davantage en le munissant de moyens de réglage permettant de coordonner les mouvements des éléments pivotants et ainsi de régler l'envergure par un seul geste de l'opérateur. Les figures 5 à 7 illustrent ce mode de réalisation.

Ces moyens de réglage comprennent un parallélogramme déformable 38 dont la traverse haute 11 forme l'un des côtés. Le côté opposé de ce parallélogramme est une bielle 39. Les deux autres côtés du parallélogramme 38 sont formés par des pattes 40 analogues aux pattes 25 des figures 2 et 3 et servant également à la fixation des organes de pulvérisation 20 et 21. Les quatre angles du parallélogramme sont formés par des articulations.

Une tringle 41 est fixée sur la tige 6 et articulée au point milieu de la bielle 39.

Le pendillard des figures 5 à 7 est de préférence muni de moyens d'indexation analogues à ceux décrits à propos de la figure 4, à ceci près qu'il suffira de n'en prévoir qu'autour de la tige 6 pour obtenir l'effet recherché. Ces moyens d'indexation n'ont pas été détaillés sur les figures 5 à 7.

Avantageusement, le pendillard de ce mode de réalisation peut se prêter à une commande à distance si, comme représenté sur la figure 5, un élément moteur 42 est couplé entre deux côtés du parallélogramme déformable 38 de manière à permettre un réglage de l'angle qu'ils font l'un par rapport à l'autre. Un tel élément moteur 42 pourra alors être commandé directement à partir du poste de pilotage de l'engin porteur. Cet élément moteur peut être un vérin comme représenté ou tout autre dispositif d'entraînement tel qu'un moteur électrique agissant sur l'une des articulations du parallélogramme soit directement soit par l'intermédiaire d'une transmission.

On notera que les directions de pulvérisation p1 à p4 des diffuseurs 23 par rapport aux rangées de végétation peuvent être choisies à 90° comme cela est suggéré sur les figures. Cependant, les organes de pulvérisation peuvent être placés également sous un autre angle en modifiant leur position sur les broches 16 et 17, la direction restant, en tout état de cause, conservée pendant un changement d'envergure du pendillard.

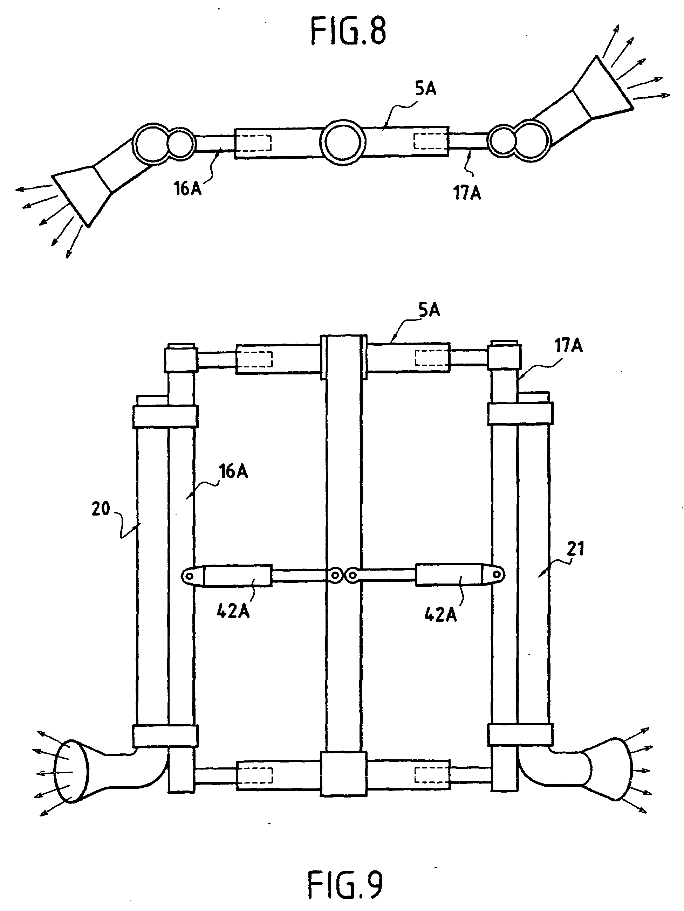

Les figures 8 et 9 montrent à titre illustratif un autre mode de réalisation possible de l'invention dans lequel le pendillard comprend une monture 5A destinée à être fixée sur un bras tel que le bras 2 des figures 2 et 3. Cette monture 5A porte, de façon coulissante dans des directions horizontales, des éléments de support 16A et 17A portant à leur tour des organes de pulvérisation 20 et 21. Les éléments de support 16A et 17A peuvent être déplacés horizontalement dans un sens et dans l'autre pour régler l'envergure du pendillard. Avantageusement, les mouvements de réglage correspondants peuvent être commandés à distance par des moyens moteurs tels que des vérins 42A.

## Revendications

1. Pendillard (3) pour appareil de pulvérisation de produits de traitement, *notamment* de produits phytosanitaires sur de la végétation plantée en ligne selon des rangées parallèles (...rₙ₋₁, rₙ, rₙ₊₁, rₙ₊₂...), ce pendillard étant destiné à être suspendu à un bras (2), de préférence de longueur et de hauteur réglables, d'un châssis porté par un véhicule agricole, ce pendillard comportant au moins deux organes de pulvérisation (20, 21) raccordés à une source de produit de traitement par l'intermédiaire de canalisations appropriées, lesdits organes de pulvérisation (20, 21) étant montés de manière à pouvoir diriger la pulvérisation respectivement sur chacune des rangées de la végétation,
**caractérisé en ce que** lesdits organes de pulvérisation sont fixés sur des ensembles de support (16, 17; 16A, 17A) montés mobiles en position sur une monture (5; 5A) suspendue audit bras (2) de manière à permettre le réglage de l'écart latéral (e1, e2) de leur sortie sans en changer la direction de pulvérisation (p1 à p4).

2. Pendillard suivant la revendication 1, **caractérisé en ce que** ladite monture (5) est montée pivotante autour d'un axe à peu près vertical sur ledit bras (2) de longueur et de hauteur réglables, et lesdits ensembles de support (16, 17) sont montés pivotants sur ladite monture (5) autour d'axes à peu près verticaux.

3. Pendillard suivant la revendication 2, **caractérisé en ce qu'**il comprend des premiers moyens d'indexation (26 à 31) de la position angulaire de ladite monture (5) par rapport audit bras (2) de longueur et de hauteur réglables.

4. Pendillard suivant l'une quelconque des revendications 2 et 3, **caractérisé en ce qu'**il comprend des seconds moyens d'indexation (32 à 37) de la position angulaire de chacune desdits ensembles de support (16, 17) par rapport à ladite monture (5).

5. Pendillard suivant l'une quelconque des revendications 2 à 4, **caractérisé en ce que** ladite monture (5) et lesdits ensembles de support pivotants (16, 17) sont couplés les uns aux autres par un parallélogramme déformable (38) pour en coordonner les mouvements pendant le réglage dé l'envergure du pendillard (3).

6. Pendillard suivant la revendication 5, **caractérisé en ce qu'**il comprend des moyens moteurs (42) tels qu'un vérin pour commander à distance le réglage dudit parallélogramme déformable (38).

7. Pendillard suivant l'une quelconque des revendications 2 à 6, **caractérisé en ce que** ladite monture (5) comprend deux traverses (11, 14) qui sont montées pivotantes sur une tige verticale (6) solidaire dudit bras (2) et qui sont en appui contre des butées radiales (8, 9) solidaires de ladite tige verticale (6), et **en ce que** les ensembles de support (16, 17) sont montés pivotants dans les extrémités desdites traverses (11, 14).

8. Pendillard suivant la revendication 7, **caractérisé en ce que** lesdits ensembles de support comprennent chacun une broche (16, 17) montée rotative dans des douilles (12, 15) prévues aux extrémités desdites traverses (11, 14) et arrêtée dans celles-ci par une butée radiale (18, 19) solidaire de la broche correspondante.

## Patentansprüche

1. Hängevorrichtung (3) für eine Vorrichtung zum Sprühen von Behandlungsmitteln, insbesondere von Pflanzenschutzmitteln, auf entlang einer Linie in parallelen Reihen (...rₙ₋₁, rₙ, rₙ₊₁, rₙ₊₂...) gepflanzte Vegetation, wobei diese Hängevorrichtung dazu bestimmt ist, an einen Arm (2) gehängt zu werden, vorzugsweise von einstellbarer Länge und Höhe, eines Gestells, das von einem landwirtschaftlichen Fahrzeug getragen ist, wobei diese Hängevorrichtung zumindest zwei Organe zum Sprühen (20, 21) aufweist, die mit einer Quelle des Behandlungsmittels über geeignete Kanäle verbunden sind, wobei die Organe zum Sprühen (20, 21) so angebracht sind, daß sie das Sprühmittel jeweils auf eine der Reihen der Vegetation richten können, **dadurch gekennzeichnet, daß** die Organe zum Sprühen auf Tragkonstruktionen (16, 17; 16A, 17A) befestigt sind, die beweglich auf einer Position auf einem Rahmen (5; 5A) angeordnet sind, der an dem Arm (2) aufgehängt ist, so daß das Einstellen des seitlichen Abstandes (e1, e2) ihres Ausganges möglich ist, ohne die Sprührichtung (p1 bis p4) zu verändern.

2. Hängevorrichtung gemäß Anspruch 1, **dadurch gekennzeichnet, daß** der Rahmen (5) schwenkbar um eine beinahe vertikale Achse auf dem Arm (2) mit einstellbarer Länge und Höhe angebracht ist und die Tragkonstruktionen (16, 17) schwenkbar um beinahe senkrechte Achsen auf dem Rahmen angebracht sind.

3. Hängevorrichtung gemäß Anspruch 2, **dadurch gekennzeichnet, daß** sie erste Indizierungsmittel (26 bis 31) für die Winkelstellung des Rahmens (5) bezüglich des Arms (2) von einstellbarer Länge und Höhe aufweist.

4. Hängevorrichtung gemäß irgendeinem der Ansprüche 2 und 3, **dadurch gekennzeichnet, daß** sie zweite Indizierungsmittel (32 bis 37) der Winkelstellung jeder der Tragkonstruktionen (16, 17) bezüglich des Rahmens (5) aufweist.

5. Hängevorrichtung gemäß irgendeinem der Ansprüche 2 bis 4, **dadurch gekennzeichnet, daß** der Rahmen (5) und die schwenkbaren Tragkonstruktionen (16, 17) miteinander durch ein deformierbares Parallelogramm (38) verbunden sind, um deren Bewegungen während des Einstellens der Spannweite des aufhängenden deformierbaren Parallelogramms (3) zu koordinieren.

6. Hängevorrichtung gemäß Anspruch 5, **dadurch gekennzeichnet, daß** sie Antriebsmittel (42) umfaßt, so wie eine Spindel, um aus einer Entfernung das verformbare Parallelogramm (38) einzustellen.

7. Hängevorrichtung gemäß irgendeinem der Ansprüche 2 bis 6, **dadurch gekennzeichnet, daß** der Rahmen (5) zwei Traversen (11, 14) aufweist, die schwenkbar auf einem senkrechten Schaft (6) angeordnet sind, der fest mit dem Arm (2) verbunden ist, und die an radialen Anschlägen (8, 9) anliegen, die fest mit dem vertikalen Schaft (6) verbunden und daß die Tragkonstruktionen (16, 17) schwenkbar zwischen den Enden der Traversen (11, 14) angebracht sind.

8. Hängevorrichtung gemäß Anspruch 7, **dadurch gekennzeichnet, daß** die Tragkonstruktionen je eine Welle (16, 17) aufweisen, die drehbar in Buchsen (12, 15) angeordnet sind, die an den Enden der Traversen (11, 14) vorgesehen sind und in diesen durch einen radialen Anschlag (18, 19) arretiert ist, der fest mit dem jeweiligen Arm verbunden ist.

## Claims

1. A pendular assembly (3) for apparatus for spraying treatment products, in particular for spraying phytosanitary products onto vegetation planted in parallel rows (... rₙ₋₁, rₙ, rₙ₊₁, rₙ₊₂ ...), said pendular assembly being intended to be suspended from an arm (2), preferably of adjustable length and height, of a frame carried by an agricultural vehicle, and said pendular assembly comprising at least two spray members (20, 21) connected to a source of treatment product by appropriate pipes, said spray members (20, 21) being mounted so as to be able to direct the spray onto each row of vegetation,
which pendular assembly is **characterized in that** said spraying members are fixed to mobile support assemblies (16, 17; 16A, 17A) mounted on a mount (5; 5A) suspended from said arm (2) so as to enable adjustment of the lateral offset (e1, e2) of their outlet without changing the spray direction (p1 to p4) thereof.

2. A pendular assembly according to claim 1, **characterized in that** said mount (5) is adapted to pivot about a substantially vertical axis on said arm (2) of adjustable length and height and said support assemblies (16, 17) are adapted to pivot on said mount (5) about substantially vertical axes.

3. A pendular assembly according to claim 2, **characterized in that** it comprises first means (26 to 31) for indexing the angular position of said mount (5) relative to said arm (2) of adjustable length and height.

4. A pendular assembly according to either claim 2 or claim 3, **characterized in that** it comprises second means (32 to 37) for indexing the angular position of each of said support assemblies (16, 17) relative to said mount (5).

5. A pendular assembly according to any one of claims 2 to 4, **characterized in that** said mount (5) and said pivoting support assemblies (16, 17) are coupled together by a deformable parallelogram (38) to coordinate their movements during adjustment of the span of the pendular assembly (3).

6. A pendular assembly according to claim 5, **characterized in that** it comprises drive means (42) such as a ram for remotely controlling the adjustment of said deformable parallelogram (38).

7. A pendular assembly according to any one of claims 2 to 6, **characterized in that** said mount (5) comprises two crossbeams (11, 14) that are adapted to pivot on a vertical rod (6) fastened to said arm (2) and bear against radial stops (8, 9) fastened to said vertical rod (6), and **in that** the support assemblies (16, 17) are adapted to pivot in the ends of said cross beams (11, 14).

8. A pendular assembly according to claim 7, **characterized in that** said support assemblies each comprise a shaft (16, 17) adapted to rotate in bushes (12, 15) provided at the ends of the crossbeams (11, 14) and stopped therein by a radial stop (18, 19) fastened to the corresponding shaft.
